# EUROPEAN PATENT APPLICATION

(11) **EP 0 926 362 A1**
(43) Date of publication of application: **30.06.1999**
(21) Application number: 98310067.8
(22) Date of filing: 08.12.1998
(51) Int. Cl.: F16B 23/00

(54) **Fastener having multiple-drive head and method of manufacture thereof**

(30) Priority: 16.12.1997 US 990700
(71) Applicant: LUCENT TECHNOLOGIES INC., Murray Hill, New Jersey 07974-0636 (US)
(72) Inventor: Byrne, Vincent M., Mesquite, Texas 75181 (US)
(74) Representative: Buckley, Christopher Simon Thirsk

(57) **Abstract**

A fastener and a method of manufacturing the same. In one embodiment, the fastener includes: (1) a shank having a thread of a particular handedness located thereabout and (2) a head connected to one end of the shank, the head having a recess in a surface thereof adapted to receive a selected one of at least two types of drivers, the recess including: (2a) an n-faceted section, located proximate the surface, adapted to engage a corresponding n-faceted shaft of a shaft-type driver and (2b) an n-slotted section, located at an end of the n-faceted section distal from the surface, adapted to engage a corresponding n-bladed tip of a blade-type driver.

## Description

### Technical Field of the Invention

The present invention is directed, in general, to screw and bolt-type fasteners and, more specifically, to a screw or bolt-type fastener having a head that adapts to more than one type of driver and a method of manufacturing such fastener.

### Background of the Invention

Screw or bolt-type fasteners (hereon generically termed "screws") abound in the world today in products and assemblies requiring mechanical connection. The classic screw employs a head with a single slot which is driven with a flat-bladed screwdriver to insert or remove the screw. Virtually all types of screws, *i.e*., wood, machine, sheet metal or self-threading, can be found with this head type. Two major problems quickly developed with the single-slotted screw head design: (a) the slot wears (rounds) from repeated use, (b) the slot distorts during a difficult installation or removal, and (c) the slot is easily damaged if the tool slips or is not engaged properly. Single-slotted screw heads are subject to damage in production environments where electric or air-powered screwdrivers are used because of: (a) the small surface area between screw head and driver bit, (b) the difficulty of controlling the speed of bit rotation, and (c) difficulty keeping the screw and drive tool perfectly co-axial. A recent variation of the single-slotted screw head is the double-slotted screw head. This embodiment has two flat-bottomed slots cut in the screw head in the form of a cross. Unfortunately, this head has all of the same problems as the single-slotted screw head.

The early problems with the single-slotted screw head stimulated development of the Phillips, or cross-pointed screw head/screwdriver system. Phillips-head screws are commonly used in production or construction environments where large numbers of screws must be driven in a short length of time. Although generally less trouble than the slotted-head screw, the Phillips screwdriver bit has a tendency to rotate in the screw head during difficult installations or removals. This usually results in damage to the slots in the screw head and/or to the screwdriver bit, making further use or removal of the screw more difficult. Power screwdrivers in production and construction environments typically use replaceable screwdriver bits formed on a 1/4 inch hexagonal cross section shank. As the bits wear out, they are easily replaced. However, an installed screw with a damaged head can be very difficult to remove. In some instances, screws have been produced which have both a single slot and Phillips slot (Phil-slot). This makes it convenient for the user to employ either basic screwdriver (whichever he has available) for installation or removal.

Hex-head (six sided) screws are also commonly used in production environments. These screws are especially convenient when they are equipped with an integral washer. The washer prevents the screw from slipping deep into the nut-driver bit of a power screwdriver. The screws can be quickly seated and driven home on a production assembly line. However, if the power nut driver is allowed to rise above the washer and spin about the head, the points of the hex-head can be damaged. Many of these screws also have either a single slot or a Phillips slot for secondary driving. Again, this design permits a user to use either a nut driver or appropriate screwdriver.

For large screws and for installations requiring a specific torque application, the most popular screw head has been the hex-head with six external faces. Square-head (four face) screws are typically used in applications such as lag bolts which can be conveniently installed and removed with open-end or adjustable (commonly called Crescent@) wrenches. Both of these screw heads suffer from the problem of corner rounding when a wrench of incorrect size is used for installation or removal. The most successful wrench for use with external hex-head machine screws is the square-drive removable six-point socket of the proper size. Hex-head screws can be installed or removed by using either six or twelve point sockets. The use of twelve point sockets, while convenient for applications involving both square- and hex-head screws, leads to problems with corner rounding of the screw heads in stubborn installations.

Also commonly available is the recessed-hex or Allen-head screw. This drive system is typically used for cap screws and set screws where greater torque than can be achieved with the Phillips or slotted screw head is required. These screws are used in applications, such as securing a pulley to a shaft, where it is important for the screw to be securely retained but a specific torque is not needed. Some set screws have been made with both a recessed-hex and a single-slot for secondary driving. However, the misuse of a flat-bladed screwdriver could damage the internal threads of the pulley axle in this case.

Within the last few decades some manufacturers have decided, especially in the automotive industry, that it is necessary to make it more difficult for the ordinary consumer to remove and replace parts on their products. Thus the star-drive or Torx® system was developed. In some applications, primarily furniture, recessed-head square-drive screws are especially popular because of the excellent mating between a power driver bit and the screw head. Tool manufacturers have countered with the production of suitable tools which permits the general population to remove and reinstall these specialized screws. Most useful has been the introduction of replaceable tool bits which fit the standard 1/4", 3/8", and ½" square-drive socket systems, but equipped with a variety of slotted, Phillips, hex, Torx®, or Allen drivers.

All of the problems delineated above assume the operator uses the proper size and type of screwdriver bit. Using the incorrect size or type of bit only makes screw head damage happen quicker. Additional problems with screws arise from the misuse of English or metric sockets on screw heads of the opposite class, again resulting in the rounding of the points of the screw head. The wide variety of screws and bolts available today has encouraged many manufacturers to develop new hand tools capable of fitting either English or metric screw heads of various sizes or ranges of sizes. However, without a suitable precision fit of driver to screw head, damage will almost certainly occur. Once damage to the screw head has occurred, removal of the screw is often quite difficult.

Accordingly, what is needed in the art is a multiple drive screw head design which permits the use of two or more of the five types of screwdrivers for installation or removal.

### Summary of the Invention

To address the above-discussed deficiencies of the prior art, the present invention provides a fastener and a method of manufacturing the same. In one embodiment, the fastener includes: (1) a shank having a thread of a particular handedness located thereabout and (2) a head connected to one end of the shank, the head having a recess in a surface thereof adapted to receive a selected one of at least two types of drivers, the recess including: (2a) an n-faceted section, located proximate the surface, adapted to engage a corresponding n-faceted shaft of a shaft-type driver and (2b) an n-slotted section, located at an end of the n-faceted section distal from the surface, adapted to engage a corresponding n-bladed tip of a blade-type driver. For purposes of the present invention, "shaft-type driver" is defined as a driver with a shaft having a relatively uniform cross-sectional shape that engages the fastener to perform the driving. The shaft of shaft-type drivers typically has a blunt, flat end. Shaft-type drivers include conventional Allen wrenches, Torx® drivers and the like.

For purposes of the present invention, "blade-type driver" is defined as a driver having a shaft with one or more blades or protrusions located on an end thereof. The blade prevents the end of the shaft from being blunt and flat. Blade-type drivers include conventional slotted and Phillips screwdrivers.

The present invention therefore introduces the broad concept of accommodating both shaft-type and blade-type drivers in separate sections of a single recess.

In one embodiment of the present invention, the n-faceted section has no more than 6 facets. In a more specific embodiment, the shaft-type driver is selected from the group consisting of: (1) a Torx® driver and (2) an Allen wrench. Those skilled in the art are familiar with other, perhaps proprietary, shaft-type drivers. The present invention encompasses all such drivers.

In one embodiment of the present invention, facets of the n-faceted section are planar. Alternatively, the facets may be curved; such would be the case in, for example, a fastener designed to be driven by a Torx® driver.

In one embodiment of the present invention, the blade-type driver is selected from the group consisting of: (1) a slotted screwdriver and (2) a Phillips screwdriver. Other conventional and later-developed blade-type drivers are within the broad scope of the present invention.

In one embodiment of the present invention, the thread is right-handed. Of course, the thread may alternatively be left-handed and may be of any pitch.

In one embodiment of the present invention, the shank terminates in a pointed end distal from the head, the fastener being a screw of any type, *e.g.*, wood, lag, sheet metal, thread forming, self-piercing, *etc.* Alternatively, the shank may terminate in a blunt end distal from the head. This configuration would yield a bolt.

In one embodiment of the present invention, the head has an n-faceted periphery adapted to engage a corresponding driver. The driver may be a socket, closed-ended, open-ended or adjustable open-ended (Crescent®) wrench. In this embodiment, a single fastener may be driven (at different times) by three fundamentally different types of drivers.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### Brief Description of the Drawings

For a more complete understanding of the present invention, reference is now made to the following descriptions taken in conjunction with the accompanying drawings, in which:
FIGURE 1 illustrates a profile view of an exemplary fastener constructed according to the present invention;
FIGURE 2A illustrates a sectional view of FIGURE 1 taken along the line 2A-2A;
FIGURE 2B illustrates an end view of the fastener head of FIGURE 1;
FIGURE 3 illustrates a profile view and corresponding end view of a lag screw incorporating an optional external hex drive feature;
FIGURE 4 illustrates an isometric view and corresponding end view of an alternative embodiment of a fastener incorporating an optional external square drive feature; and
FIGURES 5A through 5D illustrate isometric and corresponding end views of various embodiments of fasteners constructed according to the present invention.

### Detailed Description

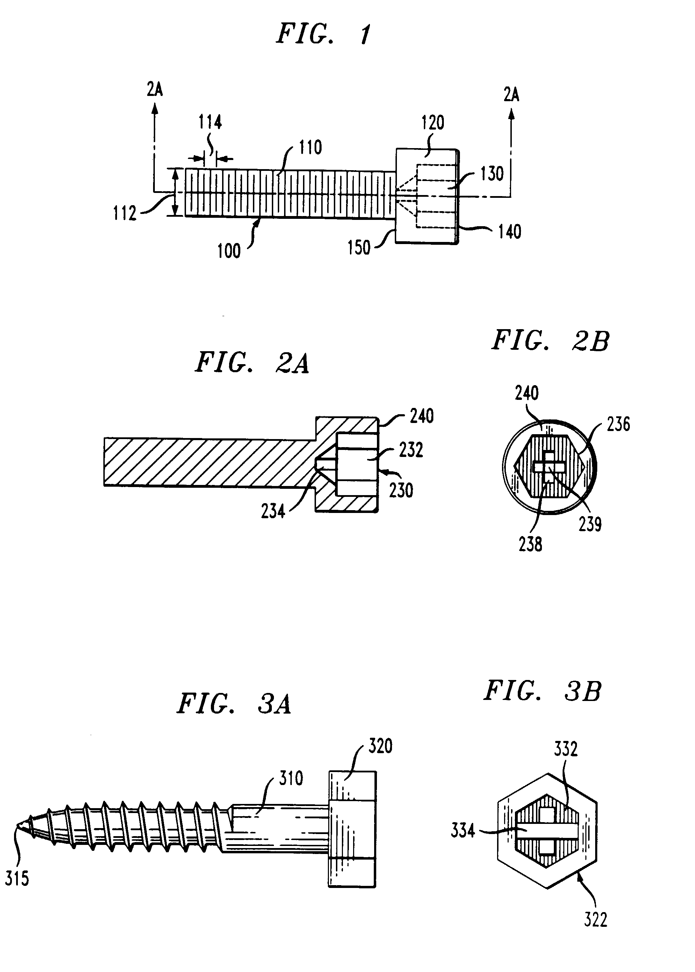

Referring initially to FIGURE 1, illustrated is a profile view of an exemplary fastener constructed according to the present invention. The fastener, generally designated 100, comprises a shank 110 and head 120. A recess 130 is manufactured within the head 120 proximate to a surface 140. The shank 110 is constructed with a particular handedness, shank diameter 112 and thread pitch 114. For the purposes of this discussion fasteners will be described as right-handed where necessary. However, one skilled in the art will recognize that left-handed applications do exist and that the present invention is equally applicable to those left-handed applications. Furthermore, for this discussion the fastener 100 will be represented generally as a cap screw with seating surface 150, although one skilled in the art will recognize that the present invention is equally applicable to any of the other screw types, *i.e*., wood, machine, lag, self-threading, set, etc. Although necessary to adequately describe a specific embodiment, screw shank diameter, shank taper, thread pitch and thread type (wood, machine screw, self-threading, etc.), will not be further discussed as they in no way limit the applicability of the present invention.

Referring now to FIGURE 2A and FIGURE 2B, illustrated is a sectional view of FIGURE 1 taken along the line 2A-2A and an end view of the fastener head of FIGURE 1. The recess 230 further comprises two sections: a first, n-faceted section 232, located proximate to the surface 240, and a second, n-slotted section 234, extending longitudinally from the inner end of the n-faceted section 232 and distally from the surface 240. The n-faceted section 232 is adapted to engage a corresponding n-faceted shaft of a shaft-type driver wherein "n" may range from three to six. In the illustrated embodiment of FIGURE 2B, the facets 236 of the n-faceted section 232 are planar and six in number. The corresponding n-faceted shaft driver for this embodiment is therefore suitably an Allen wrench. In an alternative embodiment, wherein the facets 236 of the n-faceted section 232 are curved and six in number, the corresponding n-faceted shaft driver is a Torx® driver of the appropriate size. One skilled in the art will recognize that any combinations of facet numbers from three through six and variations of facet shape (planar, curved or other) is within the broad scope and intent of the present invention.

The second n-slotted section 234 is adapted to engage a corresponding n-bladed tip of a blade-type driver. In the illustrated embodiment, the slots 238 of the n-slotted section 234 are four in number and taper to a blunt point 239. The corresponding n-bladed blade-type driver for this embodiment is therefore a Phillips screwdriver of the appropriate size.

For the sake of illustrative sizes of compatible primary and secondary drive methods, the embodiment of the primary drive section (n-faceted section 232) of FIGURES 2A and 2B can be considered to be adapted to a 5mm Allen wrench. The corresponding secondary drive section (n-slotted section 234) of the same embodiment is adapted to a #1 Phillips screwdriver. Therefore what is illustrated in FIGURES 2A and 2B is one embodiment of the current invention which may be installed or removed by the use of either a 5mm Allen wrench or a #1 Phillips screwdriver at the option of the user. Because of the "stacked" nature of the drive sections 232 234, damage which might occur to either drive section, 232 or 234, does not affect the function of the other drive section. Therefore, removal or installation can be accomplished with the alternate driver.

In an alternative embodiment, wherein the slots 238 of the n-slotted section 234 are one in number and straight, the corresponding n-bladed driver is a conventional flat-bladed screwdriver of the appropriate size. One skilled in the art will recognize that any variations of slot shape and number are within the broadest scope and intent of the present invention.

Referring now to FIGURE 3, illustrated is a profile view and corresponding end view of a lag screw incorporating an optional external hex drive feature. In the illustrated embodiment, the shank 310 is tapered to a point 315 distal from the head 320. The n-faceted section 332 of the fastener head 320 is adapted to accept an Allen wrench and the n-slotted section 334 is adapted to accept either a Phillips or a flat-bladed screwdriver. Additionally, the peripheral surface 322 of the fastener head 320 is adapted to accept an external drive mechanism of a 12 point or hex socket, as well as a box, open end or adjustable wrench.

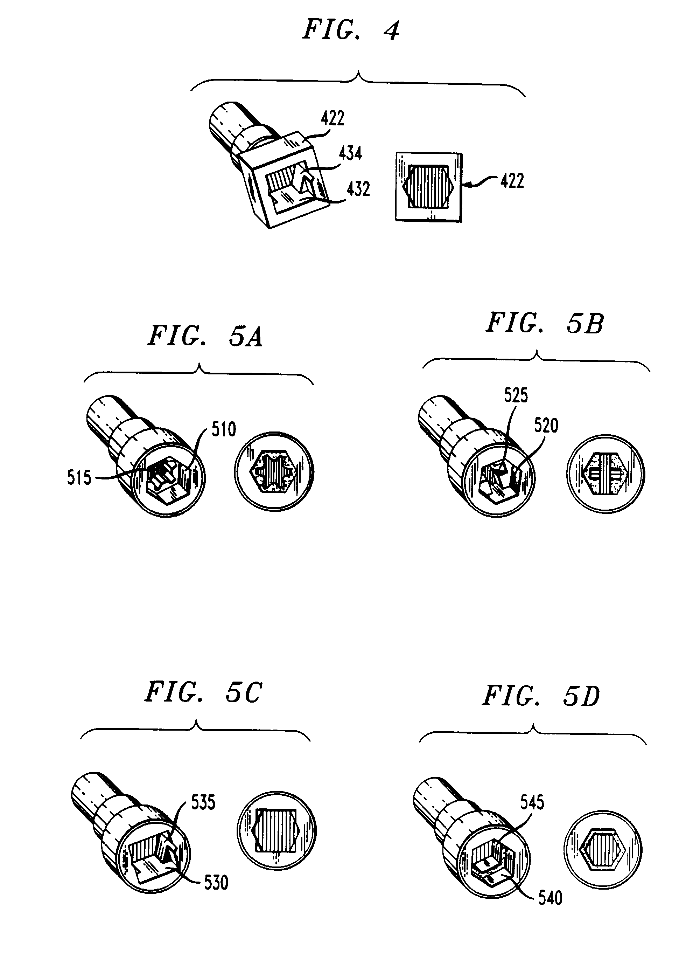

Referring now to FIGURE 4 illustrated is an isometric view and corresponding end view of a fastener incorporating an optional external square drive feature. As described above, the n-faceted section 432 of the fastener head is adapted to a 0.20 inch square drive and the n-slotted section 434 is adapted to a 5 mm Allen wrench. Additionally, the peripheral surface 422 of the fastener head is adapted to accept an external drive mechanism of a 5/16 inch square driven by a 12 point socket, open end or adjustable wrench.

Referring now to FIGURES 5A through 5D, illustrated are isometric and corresponding end views of various embodiments of fasteners constructed according to the present invention. FIGURES 5A through 5D illustrate that the n-faceted and n-slotted sections may be duplicated in various sizes and types while remaining within the greatest scope of the present invention. Thus, FIGURE 5A illustrates a primary drive recess 510 adapted to a 5mm Allen wrench with a secondary drive recess 515 adapted to a #20 Torx®. FIGURE 5B illustrates a primary drive recess 520 adapted to a 5mm Allen wrench with a secondary drive recess 525 adapted to a #1 Phillips-slotted driver. FIGURE 5C illustrates a primary drive recess 530 adapted to a 0.20 inch square drive with a secondary drive recess 535 adapted to a 5mm Allen wrench. FIGURE 5D illustrates a primary drive recess 540 adapted to a 5mm Allen wrench with a secondary drive recess 545 adapted to a 4mm Allen wrench. One skilled in the art will recognize that the above described embodiments are only representative of some of the combinations possible within the scope of the invention.

Although the present invention has been described in detail, those skilled in the art should understand that they can make various changes, substitutions and alterations herein without departing from the spirit and scope of the invention in its broadest form.

## Claims

1. A fastener, comprising:
a shank having a thread of a particular handedness located thereabout; and
a head connected to one end of said shank, said head having a recess in a surface thereof adapted to receive a selected one of at least two types of drivers. said recess including:
an n-faceted section, located proximate said surface, adapted to engage a corresponding n-faceted shaft of a shaft-type driver, and
an n-slotted section, located at an end of said n-faceted section distal from said surface, adapted to engage a corresponding n-bladed tip of a blade-type driver.

2. The fastener as recited in Claim 1, wherein said n-faceted section has no more than 6 facets, and/or the facets of said n-faceted section are planar.

3. The fastener as recited in Claim 1, wherein the shaft-type driver is either a Torx® driver, or an Allen wrench, or the blade-type driver is a slotted screwdriver, or a Phillips screwdriver.

4. The fastener as recited in Claim 1, wherein said thread is right-handed and said head has an n-faceted periphery adapted to engage a corresponding driver or the shank terminates in a pointed end distal from said head. said fastener being a screw.

5. A method of manufacturing a fastener, comprising the steps of:
forming a shank having a thread of a particular handedness located thereabout; and
forming a head on one end of said shank, said head having a recess in a surface thereof adapted to receive a selected one of at least two types of drivers, said recess including:
an n-faceted section, located proximate said surface, adapted to engage a corresponding n-faceted shaft of a shaft-type driver, and
an n-slotted section, located at an end of said n-faceted section distal from said surface, adapted to engage a corresponding n-bladed tip of a blade-type driver.

6. The method as recited in Claim 5, wherein said n-faceted section has no more than 6 facets, or the facets of said n-faceted section are planar.

7. The method as recited in Claim 5, wherein said shaft-type driver is a Torx® driver, or an Allen wrench, or the blade-type driver is a slotted screwdriver, or a Phillips screwdriver, or the thread is right-handed and the head has an n-faceted periphery adapted to engage a corresponding driver, or the method further comprises the step of forming a pointed end on said shank distal from said head, said fastener being a screw.

8. A screw, comprising:
a shank having a right-handed thread located thereabout; and
a head connected to one end of said shank, said head having a recess in a surface thereof adapted to receive a selected one of at least two types of drivers, said recess including:
an n-faceted section, located proximate said surface, adapted to engage a corresponding n-faceted shaft of a shaft-type driver. and
an n-slotted section, located at an end of said n-faceted section distal from said surface, adapted to engage a corresponding n-bladed tip of a blade-type driver.

9. The screw as recited in Claim 8, wherein said n-faceted section has no more than 6 facets, or facets of said n-faceted section are planar, or the shaft-type driver is either a Torx® driver, or an Allen wrench, or the blade-type driver is a slotted screwdriver, or a Phillips screwdriver.

10. The screw as recited in Claim 8. wherein said head has an n-faceted periphery adapted to engage a corresponding driver.
